# EUROPÄISCHE PATENTSCHRIFT

(11) **EP 2 923 102 B1**
(45) Veröffentlichungstag und Bekanntmachung des Hinweises auf die Patenterteilung: **01.03.2017**
(21) Anmeldenummer: 13821436.6
(22) Anmeldetag: 21.11.2013
(51) Int. Cl.: F16D 25/08

(54) **MONTAGEHILFE FÜR DIE MONTAGE EINES AN DER KUPPLUNG ANGEBUNDENEN CCS'S IN EINE KUPPLUNGSGLOCKE**
MOUNTING AID FOR MOUNTING A CSC CONNECTED TO THE CLUTCH IN A CLUTCH HOUSING
AUXILIAIRE DE MONTAGE DESTINÉ AU MONTAGE D'UN CSC RELIÉ À L'EMBRAYAGE DANS UNE CLOCHE D'EMBRAYAGE

(30) Priorität: 22.11.2012 DE 102012221315
(43) Veröffentlichungstag der Anmeldung: 30.09.2015
(73) Patentinhaber: Schaeffler Technologies AG & Co. KG, 91074 Herzogenaurach (DE)
(72) Erfinder: ORTMANN, Simon, 77866 Rheinau-Linx (DE)
(86) Internationale Anmeldenummer: PCT/DE2013/200314
(87) Internationale Veröffentlichungsnummer: WO 2014/079444

(56) Entgegenhaltungen:
- EP-A2- 1 795 297
- EP-A2- 1 884 677
- DE-A1-102012 220 516

## Beschreibung

Die Erfindung betrifft eine Montagehilfe für die Montage eines an der Kupplung angebundenen Nehmerzylinders (CSC's =Concentric Slave Cylinders) in eine Kupplungsglocke.

Es ist bekannt, dass bei der Montage einer Motorgetriebeeinheit die Schwierigkeit besteht, die Zuleitung für den so genannten Nehmerzylinder bei der Vereinigung von Motor und Getriebe innerhalb der Kupplungsglocke zu montieren. Der Nehmerzylinder befindet sich bei der so genannten deckelfesten Anordnung regelmäßig mit der vormontierten Kupplung am Motor, während die Kupplungsglocke Bestandteil des Getriebes bzw. des Getriebegehäuses ist. Somit muss die Anschlussleitung länger sein, als es in der fertig montierten Einheit notwendig ist. Die Folge sind unnötig lange Leitungen und damit die Gefahr von Verwerfungen, Knickstellen, Schwingungen oder unzulässige Kontakte mit rotierenden Kupplungsteilen. Mithin besteht bei der herkömmlichen Montage dieser Leitungen eine Fehlerquelle, für die nach der Montage keine Prüfung mehr möglich ist. Es ist deshalb vorgeschlagen worden, in die Kupplungsglocke tangential eine Öffnung einzubringen, durch die eine flexible Leitung geführt werden kann. Im Öffnungsbereich sollen Konnektoren entweder die Leitung selbst oder einen Leitungsanschluss festlegen. Entsprechende Vorschläge sind der DE 199 57 271 A1 zu entnehmen. Wird nach diesem Vorschlag eine flexible Leitung durch die Öffnung der Kupplungsglocke geführt und diese nach erfolgter Montage mit einem Konnektor festgelegt, besteht weiterhin die Notwendigkeit, längere Leitungen als nötig zu verwenden. Wird eine in einem Anschlussbauteil endende, innere Leitung benutzt und das Anschlussbauteil mit einem Konnektor festgelegt, entsteht als weiterer Nachteil ein erheblicher Mehraufwand an Kosten und Material.

In der Druckschrift DE 10 2009 056 379 A1 wird in der Kupplungsglocke eine Öffnung vorgesehen, die es erlaubt, Motor und Getriebe bzw. Kupplung und Getriebe mittels eines konzentrisch zur Getriebeeingangswelle angeordneten, als Kupplungsausrückeinrichtung fungierenden Nehmerzylinders (CSC) miteinander zu verbinden, ohne dass die Druckleitung zu diesem Nehmerzylinder bereits vormontiert sein muss. Die Öffnung in der Kupplungsglocke ist so angeordnet, dass sie sich in der Ebene des Anschlussbereiches der Kupplungsausrückeinrichtung befindet. Bei einer Ausführungsform der Erfindung ist die Ebene des Anschlussbereiches identisch mit der axialen Endposition der Kupplungsausrückeinrichtung. Der in die Kupplungsausrückeinrichtung integrierte Nehmerzylinder besitzt einen Anschlussbereich, der über die Kontur der Kupplungsausrückeinrichtung hinausragt und so den Anschluss von Leitungen ermöglicht. Der Zusammenbau von Motor und Getriebe kann ohne Berücksichtigung von Leitungen und ohne Berücksichtigung der Stellung des Anschlussbereiches an der Kupplungsausrückeinrichtung erfolgen.

Es besteht jedoch eine weitere Schwierigkeit darin, dass der am Ausrücker hängende Leitungskonnektor der Schwerkraft folgend auf den Boden zeigt. Der Ausgang in der Kupplungsglocke für die Hydraulikleitung befindet sich allerdings immer im oberen Bereich der Kupplungsglocke, um ein Selbstentlüften des Systems zu gewährleisten.

Die Druckschrift EP 1 884 677 A2 offenbart eine Montagehilfe für die Montage eines an der Kupplung angebundenen CSC's gemäß dem Oberbegriff des Patentanspruchs 1.

Bei anderen Anwendungen ist das Schleppmoment des Ausrücklagers so hoch, dass die Masse des Leitungskonnektors ein geringeres Moment, als das Schleppmoment des Lagers bewirkt. So wird die Leitung vor der Montage des Aggregats orientiert und dann das gesamte Aggregat in die Kupplungsglocke montiert. Diese Lösung funktioniert jedoch nur bei hohen Schleppmomenten des Lagers. Außerdem ist die Vororientierung des Leitungskonnektors nur ungenau möglich. Deshalb kann es zu Beschädigungen der Leitung während der Montage kommen.

Es besteht daher die Aufgabe der Erfindung darin, eine Montagehilfe für die Montage eines an der Kupplung angebundenen CSC's (Concentric Slave Cylinders) in eine Kupplungsglocke, insbesondere für eine so genannte deckelfeste Kupplungsausrückeinrichtung einer Motorgetriebeeinheit vorzuschlagen, die eine Ausrichtung des Leitungskonnektors (auch Anschlusspfeife genannt) der deckelfesten Kupplungsausrückeinrichtung bei der Montage gewährleistet und damit die Montage vereinfacht und keinen hohen Kostenaufwand verursacht.

Weiterhin soll die Montagehilfe und nur einen minimalen Einfluss auf die primäre Schleppmomentabstützung der deckelfesten Kupplungsausrückeinrichtung haben.

Diese Aufgabe wird erfindungsgemäß mit den kennzeichnenden Merkmalen des ersten Patentanspruchs gelöst. Vorteilhafte Ausgestaltungen ergeben sich aus den Unteransprüchen.

Die Montagehilfe für die Montage eines Nehmerzylinders (CSC = Concentric Slave Cylinders) mit einer Kupplungsglocke, insbesondere für eine so genannte deckelfeste Kupplungsausrückeinrichtung einer Motorgetriebeeinheit, wobei der Nehmerzylinder in Richtung zur Kupplungsglocke einen Adapter mit einem Leitungskonnektor und die Kupplungsglocke eine Ausgangsöffnung aufweist, besitzt erfindungsgemäß an der deckelfesten Kupplungsausrückeinrichtung (nachfolgend deckelfester Ausrücker genannt) einen verdrehgesichert befestigten Bügel, der eine Lageausrichtung der deckelfesten Kupplungsausrückeinrichtung sichert, in welcher sich bei der Montage der Leitungskonnektor im Bereich der Position der Ausgangsöffnung in der Kupplungsglocke befindet. Weiterhin ist ein mittlerer Bereich des Bügels nicht versteift und in radialer Richtung elastisch ausgeführt, so dass der Bügel im Verschleißfall eine Abstützung des Schleppmomentes realisiert.

Dadurch ist bei einem geringen Kostenaufwand eine einfache Montage gewährleistet.
Der Bügel besteht vorzugsweise aus Kunststoff und verbleibt auch nach der Montage in der deckelfesten Kupplungsausrückeinrichtung.

Die Kupplungsglocke weist eine Schulter auf, die als eine Anlage für den Bügel ausgebildet ist und diesen und somit den deckelfesten Ausrücker radial lagefixiert.

Weiterhin ist eine Ausnehmung in der Kupplungsglocke der Motorgetriebeeinheit so ausgeführt, dass diese den an der deckelfesten Kupplungsausrückeinrichtung angeordneten Bügel und ein zur Abdichtung dienendes Elastomerbauteil aufnimmt, wobei das Elastomerbauteil in Form eines O-Ringes ausgebildet ist, der zur Abdichtung der Kupplungsglocke dient.

Der Bügel weist in radialer und tangentialer Richtung nur sehr kleine oder keine Freiheitsgrade auf, was für die lageorientierte Montage wichtig ist. In axialer Richtung besitzt der Bügel einen großen Freiheitsgrad, durch welchen Toleranzen in axialer Richtung ausgleichbar sind.

Mir der erfindungsgemäßen Lösung wird somit eine Montagehilfe zur Verfügung gestellt, die eine Orientierung der Ausrichtung eines deckelfesten Ausrückers bei der Montage gewährleistet und die zusammen mit dem deckelfesten Ausrücker und der Kupplung am Motor montiert wird und dann bei zusammenfügen von Motor und Getriebe am Getriebegehäuse eingehängt werden kann, um so die korrekte Ausrichtung des Leitungskonnektors (der Anschlußpfeife) des deckelfesten Ausrückers zu gewährleisten.

Die Erfindung wird nachfolgend an einem Ausführungsbeispiel und zugehörgen Zeichnungen näher erläutert.

Es zeigen:
- Figur 1: eine dreidimensionale Vorderansicht des Bügels,
- Figur 2: eine dreidimensionale Rückansicht des Bügels,
- Figur 3: die Kupplungsglocke mit dem innenseitig aufgenommenen an den deckelfesten Ausrücker montierten Bügel,
- Figur 4: die bodenseitige Darstellung der Kupplungsglocke bei der Montage.

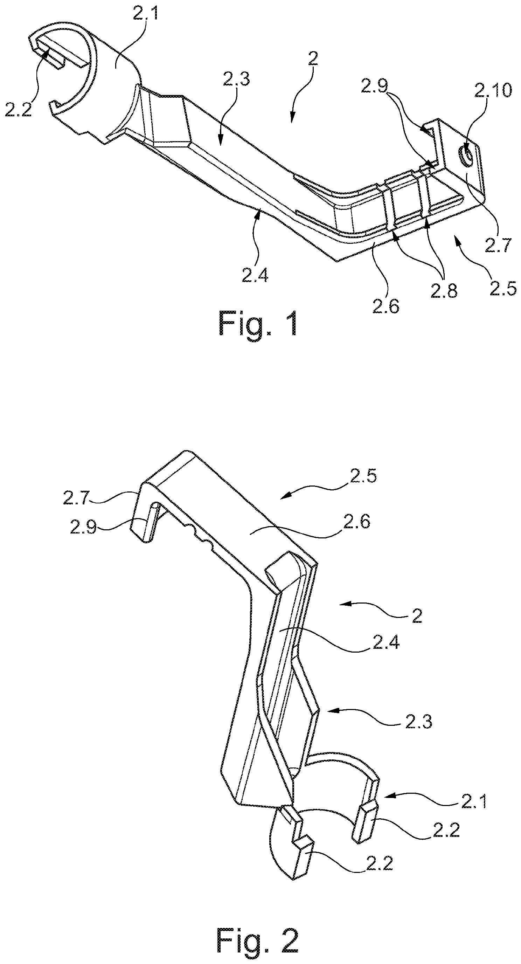

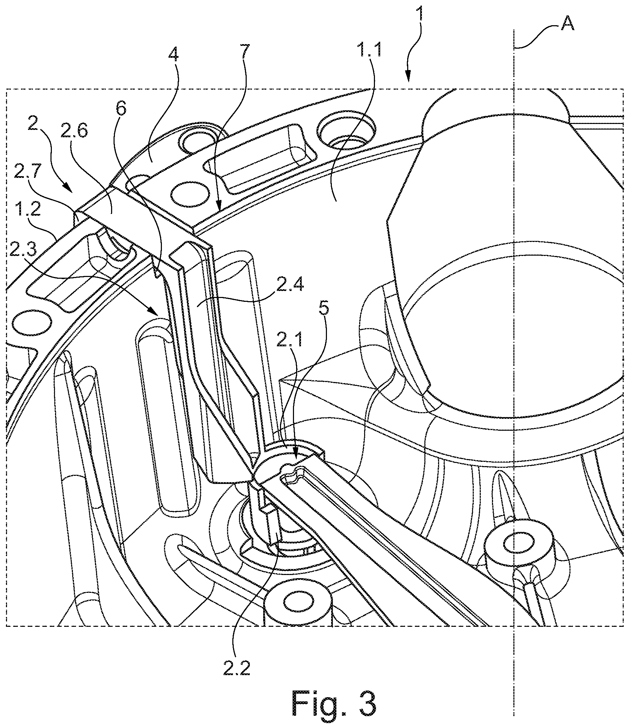

Aus den Figuren 1 bis 3 ist ersichtlich, dass die Montagehilfe in Form eines Bügels 2 ausgebildet ist. Der Bügel 2 weist ein erstes Ende 2.1 auf, welches an dem Leitungskonnektor 5 (s. Figur 3) des deckelfesten Ausrückers verdrehsicher befestigt wird, so dass im montierten Zustand sich der Leitungskonnektor 5 im Bereich der Ausgangsöffnung 3 der Kupplungsglocke 1 (s. Figur 3) befindet. Das erste Ende 2.1 weist eine im Wesentlichen halbkreisförmige Krümmung auf, durch welche die Ausgangsöffnung 3 frei bleibt. An den Enden der Krümmung des ersten Endes 2.1 sind aufeinander weisende Führungen 2.2 ausgebildet, die zur verdrehfesten Befestigung an dem Leitungskonnektor 5 des nicht weiter dargestellten deckelfesten Ausrückers dienen. Der Bügel 2 weist einen sich an das erste Ende 2.1 anschließenden Arm 2.3 auf, der sich im Wesentlichen in axialer Richtung (entlang der Längsachse A) der Kupplungsglocke 1 (s. Figur 3) entlang deren Randbereiches erstreckt und der einen im Querschnitt reduzierten Bereich 2.4 aufweist, durch welchen der Arm 2.3 in radialer Richtung flexibel ist, d.h. radial weich bleibt. Damit kann der Arm 3 im Verschleißfall des deckelfesten Ausrückers die Funktion der Schleppmomentenabstützung übernehmen.

An den Arm 2.3 schließt sich als zweites Ende des Bügels 2 ein radial nach außenweisender klammerartiger U-förmiger Bereich 2.5 an, der im montierten Zustand gemäß Figur 3 den Randbereich 1.1 der Kupplungsglocke 1 umgreift. Der klammerartige U-förmige Bereich 2.5 weist dabei einen ersten radial nach außen weisenden ersten Schenkel 2.6 auf. An das radial nach außen weisende Ende des ersten Schenkels 2.6 schließt sich ein zweiter Schenkel 2.7 an, der in Richtung und im Wesentlichen parallel zum Arm 2.3 des Bügels 2 ausgerichtet ist und an der Außenseite 1.2 des Randbereiches 1.1 der Kupplungsglocke 1 anliegt. Der erste Schenkel 2.6 weist gemäß Figur 1 an seiner Innenseite eine Dichtgeometrie 2.8 auf, die auch als Toleranzausgleich zur hier nicht dargestellten Kupplungsglocke dient. Der zweite Schenkel 2.7 weist nach innen Führungsschienen 2.9 und nach außen eine Haltenase 2.10 zu einem optionalen nicht dargestellten Hilfswerkzeug auf, welches zur Ausrichtung des Bügels dient. Die Kupplungsglocke 1 weist gemäß Figur 3 an ihrem Wandbereich 1.1 eine nach außen weisende Schulter 1.3 auf, an welcher mittels eines nicht dargestellten Hilfswerkzeuges der Bügel 2 angelegt wird. Die Schulter 1.3 ist dabei so angeordnet, dass sich nach Anlegen des Bügels 2 das zweite Ende 2.1 des Bügels 2 mit dem daran befestigten Leitungskonnektor 5 im Wesentlichen in Flucht zu der Ausgangsöffnung 3 der Kupplungsglocke 1 befinden.

Aus Figur 3 ist ersichtlich, dass eine stirnseitige Ausnehmung 6 in der Kupplungsglocke 1 der Motorgetriebeeinheit so ausgeführt ist, dass diese den ersten Schenkel 2.6 des u-förmigen Bereiches 2.5 des Bügels 2 aufnimmt. Weiterhin ist stirnseitig ein als O-Ring 7 ausgebildetes und zur Abdichtung dienendes Elastomerbauteil vorgesehen.

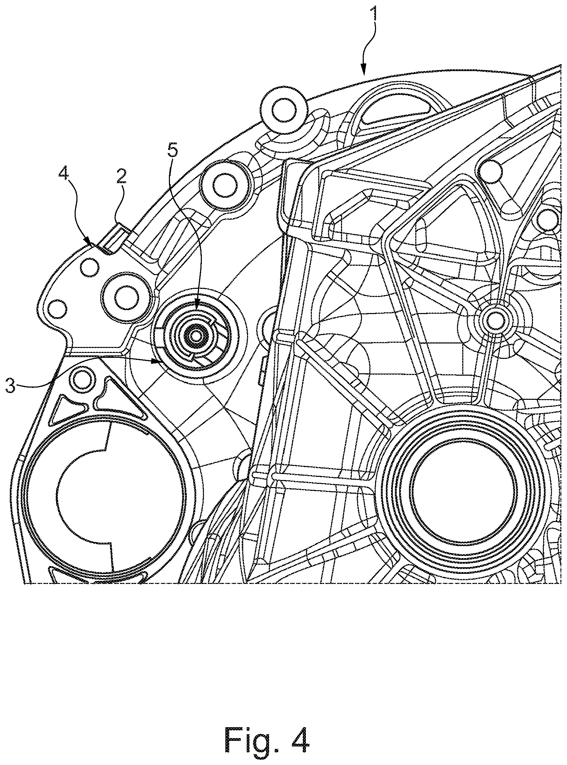

In Figur 4, welche die Sichtweise des Monteurs darstellt, wird die bodenseitige Darstellung der Kupplungsglocke 1 gezeigt. Es ist ersichtlich, dass nach Anlegen des Bügels 2 an der Schulter 1.3 der Kupplungsglocke 1 der Leitungskonnektor 5 des deckelfesten Ausrückers durch die Ausgangsöffnung 3 der Kupplungsglocke 1 zugänglich ist.

### Die Montage erfolgt folgendermaßen:

Der deckelfeste Ausrücker inkl. der Kupplungsglocke 1 und des montierten Bügels 2 werden an den Motor montiert, wozu mittels eines nicht dargestellten Hilfswerkzeuges das zweite Ende des Bügels 2 im Bereich der Führungsschienen 2.9 und der Haltenase 2.10 erfasst und gemäß Figur 3 und 4 an die Schulter 1.3 der Kupplungsglocke 1 des Getriebegehäuses angelegt wird. Nun ist der Hydraulikanschluss für den Montagevorgang ausgerichtet und Getriebe und Motor montierbar.

### Bezugszeichenliste

- 1: Kupplungsglocke
- 1.1: Randbereich
- 1.2: Außenseite
- 2: Bügel
- 2.1: erstes Ende des Bügels
- 2.2: Führungen
- 2.3: Arm
- 2.4: im Querschnitt reduzierter Bereich
- 2.5: u-förmiger Bereich
- 2.6: erster Schenkel
- 2.7: zweiter Schenkel
- 2.8: Dichtgeometrie
- 2.9: Führungsschienen
- 2.10: Haltenase
- 3: Ausgangsöffnung
- 4: Schulter
- 5: Leitungskonnektor
- 6: Ausnehmung
- 7: O-Ring
- A: Längsachse

## Patentansprüche

1. Montagehilfe für die Montage eines an der Kupplung angebundenen Nehmerzylinders in eine Kupplungsglocke (1), insbesondere für eine so genannte deckelfeste Kupplungsausrückeinrichtung einer Motorgetriebeeinheit, wobei der Nehmerzylinder in Richtung zur Kupplungsglocke (1) einen Adapter (4) mit einem Leitungskonnektor (5) und die Kupplungsglocke (1) eine Ausgangsöffnung (3) aufweist, wobei an der deckelfesten Kupplungsausrückeinrichtung ein Bügel (2) verdrehgesichert befestigbar ist, der eine Lageausrichtung der deckelfesten Kupplungsausrückeinrichtung gewährleistet, in welcher sich bei der Montage der Leitungskonnektor (5) im Bereich der Position der Ausgangsöffnung (3) der Kupplungsglocke (1) befindet, **dadurch gekennzeichnet, dass** ein mittlerer im Querschnitt reduzierter Bereich (2.4) des Bügels (2) nicht versteift und in radialer Richtung elastisch ausgeführt ist derart, dass der Bügel im Verschleißfall eine Abstützung des Schleppmomentes realisiert.

2. Montagehilfe nach Anspruch 1, **dadurch gekennzeichnet, dass** der Bügel (2) nach der Montage in der deckelfesten Kupplungsausrückeinrichtung verbleibt.

3. Montagehilfe nach Anspruch 1 oder 2, **dadurch gekennzeichnet, dass** der Bügel (2) aus Kunststoff besteht.

4. Montagehilfe nach Anspruch 1 oder 2, **dadurch gekennzeichnet, dass** eine Schulter (4) an der Kupplungsglocke (1) als Anlage für den Bügel (2) ausgebildet ist.

5. Montagehilfe nach einem der Ansprüche 1 bis 3, **dadurch gekennzeichnet, dass** eine Ausnehmung der Kupplungsglocke (1) der Motorgetriebeeinheit so ausgeführt ist, dass die Ausnehmung den an der deckelfesten Kupplungsausrückeinrichtung angeordneten Bügel (2) und ein zur Abdichtung dienendes Elastomerbauteil aufnimmt.

6. Montagehilfe nach Anspruch 5, **dadurch gekennzeichnet, dass** das Elastomerbauteil in Form eines O-Ringes ausgebildet ist, der zur Abdichtung der Kupplungsglocke dient.

7. Montagehilfe nach einem der Ansprüche 1 bis 6, **dadurch gekennzeichnet, dass** der Bügel (2) in radialer und tangentialer Richtung nur sehr kleine oder keine Freiheitsgrade aufweist und in axialer Richtung einen Toleranzen ausgleichenden großen Freiheitsgrad besitzt.

## Claims

1. Mounting aid for the mounting of a slave cylinder, which is attached to the clutch, into a clutch bell housing (1), in particular for a so-called clutch disengagement device fixed to a cover, of an engine-gearbox unit, wherein the slave cylinder has, in the direction of the clutch bell housing (1), an adapter (4) with a line connector (5), and the clutch bell housing (1) has an exit opening (3), wherein a bracket (2) can be fastened in rotationally secured fashion to the clutch disengagement device fixed to a cover, which bracket ensures that the clutch disengagement device fixed to a cover is oriented in terms of position such that, during the mounting process, the line connector (5) is situated in the region of the position of the exit opening (3) of the clutch bell housing (1), **characterized in that** a central region (2.4) of reduced cross section of the bracket (2) is of non-stiffened form and is elastic in a radial direction, in such a way that the bracket, in the event of wear, realizes support of the drag torque.

2. Mounting aid according to Claim 1, **characterized in that** the bracket (2) remains, after the mounting process, in the clutch disengagement device fixed to a cover.

3. Mounting aid according to Claim 1 or 2, **characterized in that** the bracket (2) is composed of plastic.

4. Mounting aid according to Claim 1 or 2, **characterized in that** a shoulder (4) on the clutch bell housing (1) is formed as an abutment for the bracket (2).

5. Mounting aid according to one of Claims 1 to 3, **characterized in that** a recess of the clutch bell housing (1) of the engine-gearbox unit is designed such that the recess receives the bracket (2), which is arranged on the clutch disengagement device fixed to a cover, and an elastomer component which serves for sealing purposes.

6. Mounting aid according to Claim 5, **characterized in that** the elastomer component is in the form of an O-ring which serves for sealing off the clutch bell housing.

7. Mounting aid according to one of Claims 1 to 6, **characterized in that** the bracket (2) has only very small degrees of freedom, or no degrees of freedom, in radial and tangential directions, and has a large degree of freedom, which compensates tolerances, in an axial direction.

## Revendications

1. Auxiliaire de montage pour le montage d'un cylindre récepteur relié à l'embrayage dans une cloche d'embrayage (1), en particulier pour un dispositif de débrayage d'embrayage, dit fixé au couvercle, d'une unité de transmission de moteur, le cylindre récepteur présentant, dans la direction de la cloche d'embrayage (1), un adaptateur (4) avec un connecteur de ligne (5) et la cloche d'embrayage (1) présentant une ouverture de sortie (3), un étrier (2) pouvant être fixé de manière imperdable au dispositif de débrayage d'embrayage fixé au couvercle, lequel étrier garantit une orientation en position du dispositif de débrayage d'embrayage fixé au couvercle dans laquelle, lors du montage, le connecteur de ligne (5) se trouve dans la région de la position de l'ouverture de sortie (3) de la cloche d'embrayage (1), **caractérisé en ce qu'**une région centrale (2.4) de l'étrier (2), de section transversale réduite, n'est pas rigidifiée et est réalisée de manière élastique dans la direction radiale, de telle sorte que l'étrier, en cas d'usure, assure un support du moment d'entraînement.

2. Auxiliaire de montage selon la revendication 1, **caractérisé en ce que** l'étrier (2) reste dans le dispositif de débrayage d'embrayage fixé au couvercle après le montage.

3. Auxiliaire de montage selon la revendication 1 ou 2, **caractérisé en ce que** l'étrier (2) se compose de plastique.

4. Auxiliaire de montage selon la revendication 1 ou 2, **caractérisé en ce qu'**un épaulement (4) est réalisé au niveau de la cloche d'embrayage (1) en tant qu'appui pour l'étrier (2).

5. Auxiliaire de montage selon l'une quelconque des revendications 1 à 3, **caractérisé en ce qu'**un évidement de la cloche d'embrayage (1) de l'unité de transmission de moteur est réalisé de telle sorte que l'évidement reçoive l'étrier (2) disposé au niveau du dispositif de débrayage d'embrayage fixé au couvercle et un composant en élastomère servant à l'étanchéité.

6. Auxiliaire de montage selon la revendication 5, **caractérisé en ce que** le composant en élastomère est réalisé sous la forme d'un joint torique qui sert à l'étanchéité de la cloche d'embrayage.

7. Auxiliaire de montage selon l'une quelconque des revendications 1 à 6, **caractérisé en ce que** l'étrier (2) présente un degré de liberté très petit ou aucun degré de liberté dans les directions radiale et tangentielle et possède un grand degré de liberté compensant les tolérances dans la direction axiale.
